# EUROPEAN PATENT APPLICATION

(11) **EP 4 715 970 A1**
(43) Date of publication of application: **25.03.2026**
(21) Application number: 24852066.0
(22) Date of filing: 01.07.2024
(51) Int. Cl.: H01M 50/105, H01M 50/119, H01M 10/48

(54) **DEVICE FOR POUCH FORMING AND POUCH FORMING METHOD USING SAME**

(30) Priority: 10.08.2023 KR 20230104551
(71) Applicant: LG Energy Solution, Ltd., Seoul 07335 (KR)
(72) Inventor: PARK, Yangkyu, Daejeon 34122 (KR)
(74) Representative: Goddar, Heinz J.
(86) International application number: PCT/KR2024/009173
(87) International publication number: WO 2025/033710

(57) **Abstract**

A pouch forming apparatus is configured to form a receiving portion for housing an electrode assembly in a pouch sheet, and includes a seating unit on which the pouch sheet is seated, a pressing plate which fixes the pouch sheet to the seating unit by pressing the pouch sheet, a lifting unit which causes vertical movement of the pressing plate, and a forming unit which presses the pouch sheet to form the receiving portion, wherein a sensor unit for measuring the pressure formed between the pressing plate and the seating unit is provided on an upper part of the seating unit.

## Description

### [TECHNICAL FIELD]

### CROSS-REFERENCE TO RELATED APPLICATIONS

This application claims priority to Korean Patent Application No. 10-2023-0104551 filed on August 10, 2023, the disclosures of each of which are incorporated herein by reference in their entirety.

### TECHNICAL FIELD

The present disclosure relates to a pouch forming apparatus, and more particularly, to a pouch forming apparatus that forms the shape of a cell case in a manufacturing process of a battery cell.

### [BACKGROUND]

As a secondary battery is attracted considerable attention as an energy source for power-driven devices, such as an electric bicycle, an electric vehicle, and a hybrid electric vehicle, as well as an energy source for mobile devices, such as a mobile phone, a digital camera, and a laptop computer, demand for the secondary battery is rapidly increasing.

Based on the shape of a battery case, a secondary battery may be classified into a cylindrical battery in which an electrode assembly is mounted in a cylindrical metal container, a prismatic battery in which an electrode assembly is mounted in a prismatic metal container, or a pouch type battery in which an electrode assembly is mounted in a pouch-shaped case made of an aluminum laminate sheet.

In addition, the electrode assembly may be typically classified into a jelly roll type (winding type) electrode assembly having a structure in which long sheet type positive electrodes and negative electrodes are wound with a separator interposed therebetween, a stacked type (lamination type) electrode assembly in which a plurality of positive and negative electrodes cut in a prescribed size unit are sequentially stacked with a separator interposed therebetween, and a stacked/folded type electrode assembly in which stacked type unit cells are wound with a long separator.

In the manufacturing process of a battery cell, the electrode assembly is sealed together with an electrolyte in a prescribed case. Among these, in the case of a pouch-type battery, it is manufactured by forming a receiving portion in a pouch sheet, then receiving a stacked-type or stacked/folded-type electrode assembly in the receiving portion and injecting an electrolyte therein. However, since the forming process of the receiving portion is performed by fixing the pouch sheet and then pressing the pouch sheet with a punch, etc., there is a problem that cracks occur in the pouch sheet or excessive wrinkles are formed if pressure is not appropriately adjusted.

### [DETAILED DESCRIPTION OF THE INVENTION]

### [Technical Problem]

Therefore, the present disclosure has been designed to solve the above-mentioned problems, and therefore, an object thereof is to minimize cracks or wrinkles that occur in a pouch sheet during the process of forming the pouch sheet of a battery cell.

### [Technical Solution]

According to one aspect of the present disclosure, there is provided a pouch forming apparatus configured to form a receiving portion for housing an electrode assembly in a pouch sheet, the apparatus comprising: a seating unit which the pouch sheet is seated, a pressing plate which fixes the pouch sheet to the seating unit by pressing the pouch sheet, a lifting unit which causes vertical movement of the pressing plate, and a forming unit which presses the pouch sheet to form the receiving portion, wherein a sensor unit for measuring the pressure formed between the pressing plate and the seating unit is provided on an upper part of the seating unit.

The upper part of the seating unit is provided with a receiving groove for forming the receiving portion, and the sensor unit may not correspond to the receiving groove.

The upper part of the seating unit is provided with a receiving groove for forming the receiving portion, and the pressing plate may press the pouch sheet located in the portion where the receiving groove is not formed in the seating unit.

The lifting unit is formed in a plurality, and the plurality of lifting units may operate independently of each other.

The sensor unit may include a surface pressure sensor.

The sensor unit acquires a pressure value according to each position, the position of the center of gravity is calculated based on the pressure value, and the pressure value according to each position may be displayed as a relative value based on the pressure value formed at the center of gravity.

The pressure between the seating unit and the pressing plate changes in accordance with the operation of the lifting unit, so that the position of the center of gravity may move.

The lifting unit may operate based on the pressure value acquired by the sensor unit.

The lifting unit includes a first lifting unit and a second lifting unit, and one of the first lifting unit and the second lifting unit may operate based on the pressure value acquired from the sensor unit, thereby adjusting the inclination of the pressing plate.

According to another aspect of the present disclosure, there is provided a pouch forming method, the method comprising the steps of: seating a pouch sheet on a seating unit, pressing the pouch sheet through a pressing plate to fix the pouch sheet on the seating unit, adjusting the inclination of the pressing plate through a lifting unit based on a pressure value acquired by a sensor unit, and pressing the pouch sheet through a forming unit to form a receiving portion in the pouch sheet.

The step of adjusting the inclination of the pressing plate may comprise the steps of: calculating the position of the center of gravity based on the pressure value acquired by the sensor unit, comparing the calculated position of the center of gravity with a pre-stored position of the center of gravity, and operating the lifting unit so that the calculated position of the center of gravity coincides with the pre-stored position of the center of gravity, thereby adjusting the inclination of the pressing plate.

### [Advantageous Effects]

According to one aspect of the present disclosure, when forming a pouch-shaped case, the pouch sheet can be pressed with an appropriate pressure, thereby minimizing the occurrence of cracks or wrinkles formed in a pouch sheet.

In addition, the present disclosure may have various other effects, and such effects will be described in each aspect, or any effect that can be easily inferred by those skilled in the art will not be described in detail.

### [BRIEF DESCRIPTION OF THE DRAWINGS]

FIG. 1 is a side view of a conventional pouch forming apparatus;
FIG. 2 is a diagram explaining the operation of the pouch forming apparatus according to FIG. 1;
FIG. 3 is a top view of the lower die of the pouch forming apparatus according to FIG. 1;
FIG. 4 is a side view of a pouch forming apparatus according to one aspect of the present disclosure;
FIG. 5 is a top view of a seating unit of the pouch forming apparatus according to FIG. 4;
FIG. 6 shows the position of a lifting unit corresponding to a sensor unit of the pouch forming apparatus according to FIG. 4;
FIGS. 7 and 8 are drawings depicting the operation of the pouch forming apparatus according to one aspect of the present disclosure; and
FIG. 9 is a flow chart of a pouch forming method according to one aspect of the present disclosure.

### [DETAILED DESCRIPTION OF THE EMBODIMENTS]

Hereinafter, aspects of the present disclosure will be described in detail with reference to the accompanying drawings. The terms used in the specification and the appended claims should not be construed as limited to general and dictionary meanings, but construed as meanings and conception coinciding the technical aspects of the present disclosure on the basis of the principle that the inventors can appropriately define the concept of the terms to explain the invention in the optimum method. Therefore, aspects described in the specification and the configurations shown in the drawings are not more than exemplary aspects of the present disclosure and do not fully cover the spirit of the present disclosure. Accordingly, it should be understood that there may be various equivalents and modifications that can replace those when this application is filed.

In the drawings, the dimension of each of components or a specific portion constituting the component is exaggerated, omitted, or schematically illustrated for convenience in description and clarity. Thus, the dimension of each element does not entirely reflect an actual size. Moreover, detailed descriptions related to well-known functions or configurations will be omitted in order not to unnecessarily obscure subject matters of the present disclosure.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similar to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

A pouch forming apparatus according to one aspect of the present disclosure is for forming a receiving portion for housing an electrode assembly in a pouch sheet.

Hereinafter, before describing a pouch forming apparatus according to an aspect of the present disclosure, a conventional pouch forming apparatus will be described first.

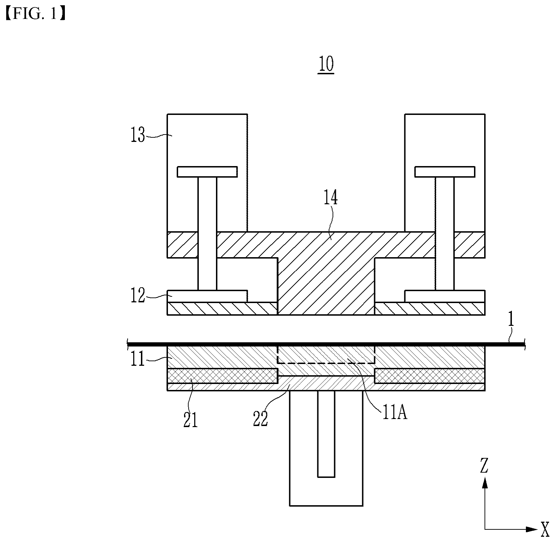

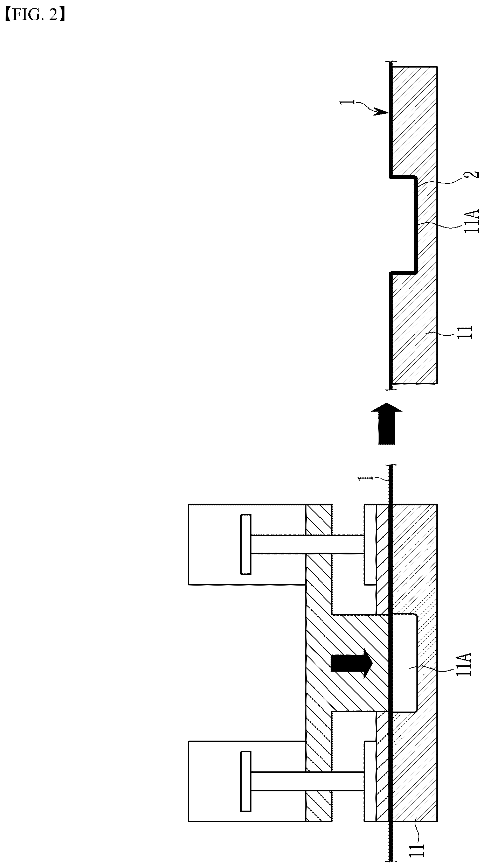

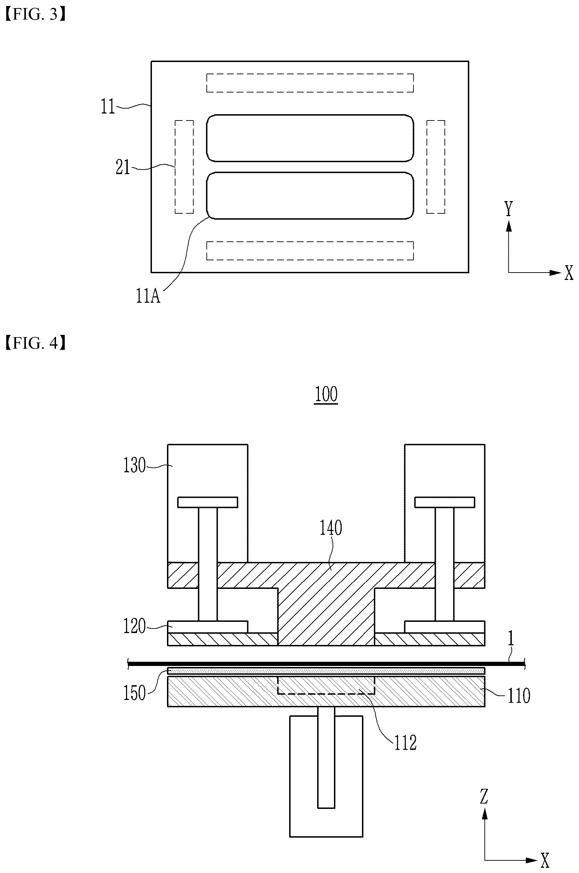

FIG. 1 is a side view of a conventional pouch forming apparatus. FIG. 2 is a diagram explaining the operation of the pouch forming apparatus according to FIG. 1. FIG. 3 is a top view of the lower die of the pouch forming apparatus according to FIG. 1.

Referring to FIG. 1, a conventional pouch forming apparatus 10 may include a lower die 11 on which a pouch sheet 1 is placed, a stripper 12 that presses the pouch sheet 1 from the upper side to fix it to the lower die 11, a cylinder 13 that vertically moves the stripper 12, and a punch 14 that presses the pouch sheet 1 from the upper side to form a receiving portion 2. Here, the lower die 11 is located on the back plate 22, and a shim 21 may be located between the lower die 11 and the back plate 22.

As shown in Fig. 2, the pouch forming process using the pouch forming apparatus 10 can be performed by seating the pouch sheet 1 on the upper surface of the lower die 11 on which the forming groove 11A is formed, then fixing the edge of the pouch sheet 1 with the stripper 12, and then vertically moving the punch 14 to deform the pouch sheet 1.

However, during this process, the pouch sheet 1 may be damaged or wrinkles may be formed at the corners of the receiving portion 2, so that an operator needs to appropriately adjust the pressing force of the stripper 12 that fixes the pouch sheet 1. Usually, the pressing force of the stripper 12 can be adjusted by the vertical movement of the stripper 12 by the cylinder 13, but conventionally, it has been difficult to accurately confirm the magnitude of pressure applied to the pouch sheet 1, thereby making it difficult to adjust the pressing force of the stripper 12. Therefore, conventionally, as shown in FIG. 3, in order to adjust the pressure acting on the pouch sheet 1, a method of arbitrarily manipulating the cylinder 13 or adding a shim 21 between the lower die 11 and the back plate 22 was used. However, this conventional method has problems that precision is reduced and the quality of the final product is uneven. In addition, the process of attaching and detaching the mold required a lot of operation time and effort of operators.

Next, a pouch forming apparatus according to one aspect of the present disclosure will be described. The pouch forming apparatus of the present aspect has been designed to solve the problems of a conventional technology, and aims to minimize wrinkles or cracks formed in the pouch sheet 1 by more precisely adjusting the pressure applied to the pouch sheet 1.

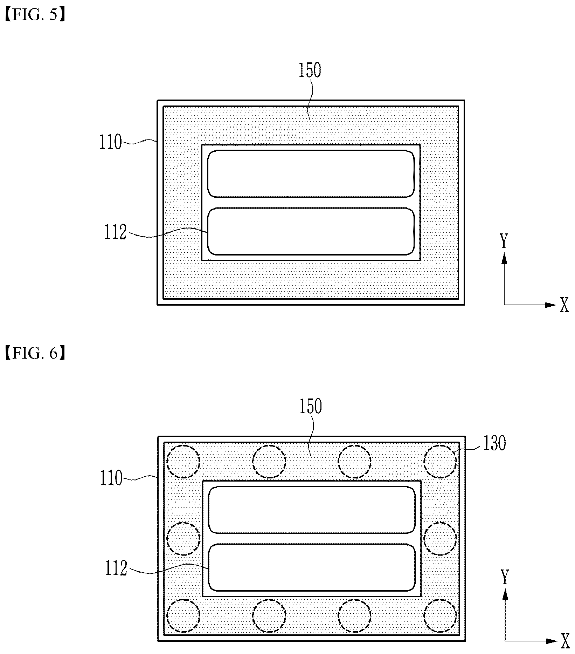

FIG. 4 is a side view of a pouch forming apparatus according to one aspect of the present disclosure. FIG. 5 is a top view of a seating unit of the pouch forming apparatus according to FIG. 4. FIG. 6 shows the position of a lifting unit corresponding to a sensor unit of the pouch forming apparatus according to FIG. 4.

Referring to FIG. 4, the pouch forming apparatus 100 of the present aspect may comprise a seating unit 110 which the pouch sheet 1 is seated, a pressing plate 120 that fixes the position of the pouch sheet 1, a lifting unit 130 that vertically moves a pressing plate 120, a forming unit 140 that forms a receiving portion 2 in which an electrode assembly is received by pressing a pouch sheet 1, and a sensor unit 150 for measuring the pressure acting on the pouch sheet 1.

The seating unit 110 can provide an operation space for forming a receiving portion 2 in the pouch sheet 1. The seating unit 110 can be located on the lower side of the pouch sheet 1. The seating unit 110 can be a die. However, it is not necessarily the case, and the seating unit can be provided to have a function similar to a die.

A receiving groove 112 may be formed on the upper surface of the fixing unit 110. The receiving groove 112 may receive a pouch sheet 1 that is pressed by the forming unit 140, thereby forming a receiving portion 2 in the pouch sheet 1. The pouch sheet 1 may be located to cover the receiving groove 112 formed on the upper surface of the fixing unit 110.

Here, the pouch sheet 1 may include aluminum. However, the physical properties of the pouch sheet 1 are not limited by the above-mentioned examples, and any known material may be applied as long as it has a predetermined rigidity and can stably receive the electrode assembly and the electrolyte.

The pressing plate 120 may be for fixing the position of the pouch sheet 1. The pressing plate 120 may be located on the upper side of the seating unit 110. The pressing plate 120 may be located on the upper side of the pouch sheet 1. The pressing plate 120 may fix the pouch sheet 1 to the seating unit 110 by pressing the pouch sheet 1. The pressing plate 120 may be a stripper, but it is not necessarily the case.

The pressing plate 120 may have a shape in which the outer edge corresponds to the outer edge of the seating unit 110, but does not correspond to the receiving groove 112. As for a specific example, the pressing plate 120 may have a square plate shape or a shape in which the center part is removed.

The pressing plate 120 can press the edge of the pouch sheet 1. More specifically, the pressing plate 120 can press the pouch sheet 1 located in a portion where the receiving groove 112 is not formed in the seating unit 110. The pressing plate 120 can press the outside of the edge of the receiving portion 2 in the pouch sheet 1. In this way, the pressing plate 120 may not correspond to the receiving groove 112 and the receiving portion 2 of the pouch sheet 1, and thus may not restrict the vertical movement of the forming unit 140 that forms the receiving portion 2. At this time, the receiving portion 2 may be broadly interpreted as referring not only to the receiving portion 2 already formed in the pouch sheet 1, but also to the position where the receiving portion 2 is formed in the pouch sheet 1.

The lower part of the pressing plate 120 may press the pouch sheet 1 by making contact with the pouch sheet 1, or may press the pouch sheet 1 directly or indirectly through other members that make contact with the pouch sheet 1. A lifting unit 130 may be located on the upper part of the pressing plate 120, in which the lifting unit adjusts the pressure applied to the pouch sheet 1 from the pressing plate 120 by vertically moving the pressing plate 120.

The lifting unit 130 may cause vertical movement of the pressing plate 120. The lifting unit 130 may increase the pressure applied to the pouch sheet 1 by descending the pressing plate 120. In addition, the lifting unit 130 may reduce the pressure applied to the pouch sheet 1 by ascending the pressing plate 120. The lifting unit 130 may be a cylinder that moves an object through a piston movement by air pressure, but it is not necessarily the case.

The lifting unit 130 may be provided with a pressure sensor. For example, the lifting unit 130 may move the pressing plate 120 using air pressure, and the lifting unit 130 may be provided with an adjustment valve (e.g., a solenoid valve, etc.) for adjusting air pressure and a pressure sensor for measuring air pressure. The displacement level of the pressing plate 120 may be estimated through the pressure sensor provided in the lifting unit 130, and the pressure applied to the pouch sheet 1 through the pressing plate 120 may be estimated. However, since the pressure applied to the pouch sheet 1 may vary depending on the flatness of the seating unit 110, it is unreasonable to estimate the pressure of the pouch sheet 1 by relying on the pressure sensor provided in the lifting unit 130. In addition, since the value collected by the pressure sensor provided in the lifting unit 130 is the pressure formed in a narrow area, the error may be large when representing the pressure value of the pouch sheet 1 in a wide area.

The lifting unit 130 may be formed in a plurality, and may operate individually. As shown in FIG. 6, the plurality of lifting unit 130 may be located along the edge of the seating unit 110. The inclination of the pressing plate 120 may be changed by adjusting the ascending and descending of the pressing plate 120 by the operation of some of the plurality of lifting units 130. By adjusting the inclination of the pressing plate 120, the pressure plate 120 can locally press the pouch sheet 1 or reduce the pressure acting on the pouch sheet 1. As for a specific example, if the level at which the pressing plate 120 is lowered by a lifting unit 130 located on the -X axis is greater than that by other lifting units 130, the portion located on the -X axis of the pouch sheet 1 may be pressed more strongly than other portions. Since the plurality of lifting units 130 operate independently in this way, the pressure applied to the pouch sheet 1 located between the pressing plate 120 and the seating unit 110 can be uniformly adjusted.

The forming unit 140 may form a receiving portion 2 in the pouch sheet 1. The forming unit 140 may be located on the upper side of the pouch sheet 1. The forming unit 140 may be located at a position corresponding to the receiving groove 112 of the fixing unit 110. The forming unit 140 may press the pouch sheet 1 in the direction where the receiving groove 112 is located, and a receiving portion 2 having a shape corresponding to the receiving groove 112 may be formed in the pouch sheet 1. The receiving portion 2 may have a depressed shape from one surface of the pouch sheet 1 toward the other surface. The forming unit 140 may form the receiving portion 2 by descending toward the pouch sheet 1, and after the formation of the receiving portion 2 is completed, it may ascend again and return to its original position.

Here, the end of the forming unit 140 can be received in the receiving groove 112. For this purpose, the cross-sectional area of the end of the forming unit 140 can be smaller than the cross-sectional area of the receiving groove 112. In addition, the portion of the forming unit 140 that is inserted into the receiving groove 112 and the inner surface of the receiving groove 112 can be spaced apart by a gap equal to or larger than the thickness of the pouch sheet 1.

The sensor unit 150 may be for measuring the pressure applied to the pouch sheet 1. The pouch forming apparatus 100 of the present aspect collects the pressure value applied to the pouch sheet 1 through the sensor unit 150, and controls the lifting unit 130 based on the collected value, thereby making the pressure applied to the pouch sheet 1 uniform.

The sensor unit 150 may be located between the seating unit 110 and the pressing plate 120. The sensor unit 150 may be provided on the upper part of the seating unit 110. A pouch sheet 1 may be located on the upper side of the sensor part 150. The pressure applied to the pouch sheet 1 may vary depending on whether the seating unit 110 is positioned flat, etc., whereby in the present aspect, the sensor unit 150 may be provided on the upper part of the seating unit 110 to directly measure the pressure applied to the pouch sheet 1.

As shown in FIG. 5, the sensor unit 150 may be located outside the edge of the receiving groove 112 on the upper surface of the fixing unit 110. The sensor unit 150 may be located at a position where the receiving groove 112 is not formed on the upper surface of the fixing unit 110. The sensor unit 150 may not correspond to the receiving groove 112. The sensor unit 150 may correspond to the lower surface of the pressing plate 120. Here, the upper surface and the lower surface may refer to a surface located at the upper part and a surface located at the lower part relatively based on the Z-axis.

The sensor unit 150 may include a sensor that measures the pressure formed on a plane with high resolution. For example, the sensor unit 150 may include a surface pressure sensor. Here, the surface pressure sensor is suitable for measuring the surface pressure, has high resolution, and can have a small measurement error even when applied to multiple areas. The sensor unit 150 of the present aspect can be designed to cover a wide area by using the surface pressure sensor, and can precisely collect the pressure value according to each position.

On the other hand, since the sensor unit 150 is located on the upper part of the seating unit 110, it can be pressed together with the pouch sheet 1 by the pressing plate 120. Therefore, the thickness value of the sensor unit 150 may be small and the deviation of the thickness value according to the position may be minimized. For example, the thickness value of the sensor unit 150 may be within 0.01 mm to 0.5 mm, or 0.2 mm to 0.4 mm.

The pressure value measured by the sensor unit 150 can be output as a pressure distribution. The pressure value measured by the sensor unit 150 can be output as a coordinate value according to each position. The measured pressure value can be displayed on a quadrant extending in the front-back and left-right directions from a single point.

The sensor unit 150 may include a plurality of grid-shaped sub-sensors, and the position of each grid when the results are output can be expressed as X-axis and Y-axis coordinates. In addition, the pressure value corresponding thereto may be expressed as a value on the corresponding coordinates. For example, when it is desired to cover a range of 10*10ch, the surface pressure sensor may be configured to include 10 sub-sensors of 1ch*1ch size in the horizontal and vertical directions. Through this, pressure values for a total of about 100 positions in the 10*10ch range may be collected.

Here, the pressure value that is output may be a relative value with respect to the reference position. The pressure value that is output may be a pressure distribution value based on the center of gravity. For example, if the center of gravity is located at the center of the sensor unit 150, the pressure value according to each position may be expressed as + if it is higher than the pressure value formed at the center, and expressed as - if it is lower than this.

Meanwhile, although not shown in the figure, the pouch forming apparatus 100 of the present aspect may include a control unit that unifies operation of the pouch forming apparatus 100.

The control unit can receive the pressure value collected from the sensor unit 150. The control unit can calculate the pressure value received from the sensor unit 150 in a coordinate system. In addition, the control unit can control the output unit included in the pouch forming apparatus 100 or the output unit connected to the pouch forming apparatus 100 to display the processed pressure value.

However, as described above, the processing of the pressure value does not necessarily have to be performed by the control unit of the pouch forming apparatus 100, and according to an aspect, the sensor unit 150 may individually include the control unit, and the pressure value may be calculated in a coordinate system by the control unit included in the sensor unit 150.

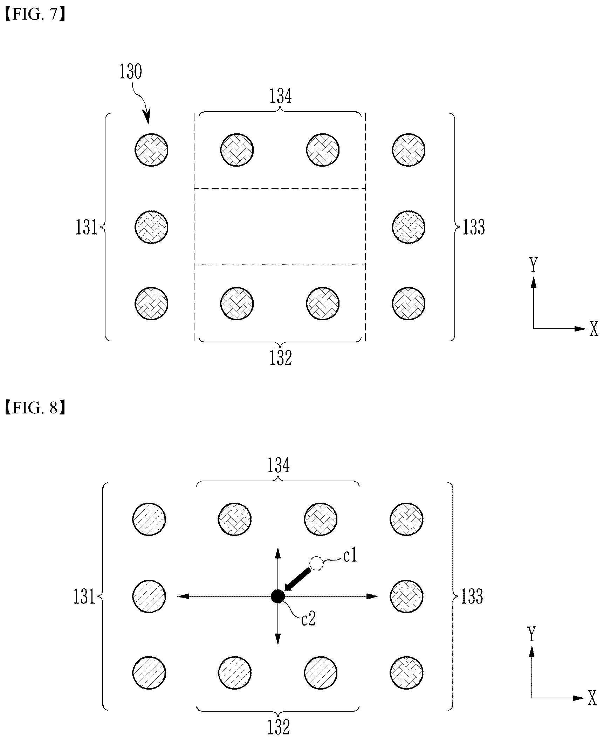

The control unit can locally adjust the pressure applied to the pouch sheet 1. The control unit controls operation of the lifting unit 130 based on the pressure value acquired by the sensor unit 150, thereby making the pressure applied to the pouch sheet 1 uniform. The control unit can control operation of the lifting unit 130 so that the position of the center of gravity of the pouch sheet 1 moves to a preset center of gravity. This will be described in more detail later with reference to FIGS. 7 and 8.

FIGS. 7 and 8 are drawings explaining the operation of the pouch forming apparatus according to one aspect of the present disclosure. In FIG. 7, the dotted line is only for dividing the lifting unit 130 according to its position, and is not included in the content of the present disclosure.

Referring to FIGS. 7 and 8, the lifting unit 130 of the present aspect can control its operation based on the pressure value acquired by the sensor unit 150.

Referring to FIG. 7, the lifting unit 130 of the present aspect can be formed in a plurality. For convenience of explanation, the lifting unit 130 can be divided into a first lifting unit 131, a second lifting unit 132, a third lifting unit 133, and a fourth lifting unit 134 according to its position. Here, the first lifting unit 131 is a lifting unit 130 located in the -X-axis direction, the second lifting unit 132 is a lifting unit 130 located in the -Y-axis direction, the third lifting unit 133 is a lifting unit 130 located in the +X-axis direction, and the fourth lifting unit 134 is a lifting unit 130 located in the +Y-axis direction.

The sensor unit 150 can measure the pressure applied to the pouch sheet 1 after the pouch sheet 1 is located on the seating part 110 and the pressing plate 120 is descended to press the pouch sheet 1. The sensor unit 150 can measure the pressure formed between the edge of the seating part 110 and the pressing plate 120. The sensor unit 150 can acquire the magnitude of the pressure formed outside the edge of the receiving portion 2 according to its position. The pressure value according to each position can be displayed as a value calculated based on the center of gravity of the current state. As shown in FIG. 8, the initially output value can be a pressure distribution value based on the first center of gravity c1.

Meanwhile, what the operator desires may be a state where the deviation of each pressure is minimized and distributed based on the value of the second center of gravity c2. Here, the value of the second center of gravity c2 desired by the operator may vary depending on the mold that determines the shape of the receiving portion 2. Therefore, the second center of gravity c2 may be a value input by the operator or a value that has been stored in advance. In order to receive input of a predetermined value from the user in this way, the pouch forming apparatus 100 may include an input unit, or may be connected to an external device that includes an input unit. In addition, the pouch forming apparatus 100 may include a storage unit, through which the input value may be stored.

The lifting unit 130 can move the position of the center of gravity by adjusting the level of vertical movement of the pressing plate 120. More specifically, through the position of the first center of gravity c1, it can be inferred that the third lifting unit 133 and the fourth lifting unit 134 located in the +X-axis and +Y-axis directions apply a higher pressure to the pouch sheet 1 than the first lifting unit 131 and the second lifting unit 132 located in the -X-axis and -Y-axis directions. Therefore, by further descending the first lifting unit 131 and the second lifting unit 132 or ascending the third lifting unit 133 and the fourth lifting unit 134, the position of the center of gravity can be moved from the first center of gravity c1 to the second center of gravity c2. The operation of this lifting unit 130 can be controlled by the control unit.

At this time, the sensor unit 150 can collect the pressure value in real time, and the collected pressure value can be calculated according to a predetermined algorithm and then output. Therefore, after the operation of the lifting unit 130 is completed, the position of the center of gravity can be confirmed again by the sensor unit 150. The lifting unit 130 can operate until the calculated position of the center of gravity coincides with the second center of gravity c2, thereby adjusting the inclination of the pressing plate 120. If the calculated position of the center of gravity coincides with the second center of gravity c2, the pressure applied to the pouch sheet 1 can be determined to be uniform. If the calculated position of the center of gravity is the second center of gravity c2 desired by the operator, the operation of the lifting unit 130 can be interrupted. If it is confirmed that the pressure applied to the pouch sheet 1 is uniform based on the output value of the sensor unit 150, the operation of the lifting unit 130 can be interrupted, and the forming unit 140 can be descended to form the receiving portion 2 in the pouch sheet 1. Executing and interrupting the operation of the lifting unit 130 or the forming unit 140 in this way can be performed by the control unit. In addition, processing of information collected from the sensor unit 150 can also be performed by the control unit.

Next, a pouch forming method based on the above description will be described. The pouch forming method described below may be performed by the above-mentioned pouch forming apparatus 100. Therefore, the above contents may all be applied to the descriptions below, and the same descriptions are omitted to avoid redundant descriptions.

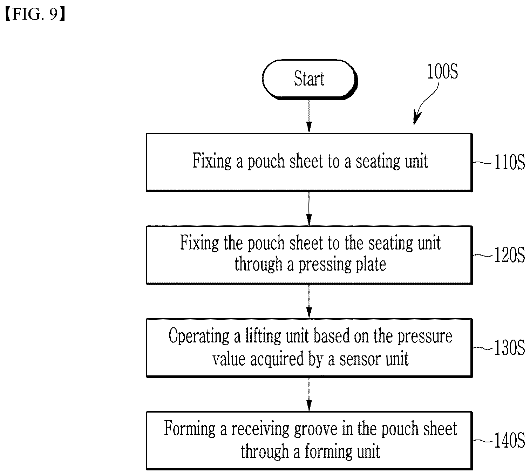

FIG. 9 is a flow chart of a pouch forming method according to one aspect of the present disclosure.

Referring to FIG. 9, the pouch forming method (S100) according to the present aspect may include a step (S110) of seating the pouch sheet 1 on the seating unit 110, a step (S120) of fixing the pouch sheet 1 to the seating unit 110 through the pressing plate 120, a step (S130S) of operating the lifting unit 130 based on the pressure value acquired by the sensor unit 150, and a step (S140S) of forming the receiving portion 2 in the pouch sheet 1.

Next, each step will be described in more detail.

The pouch sheet 1 can be seated on the upper surface of the seating unit 110 (S110). The seating unit 110 may include a receiving groove 112 formed on the upper surface of the seating unit 110. The pouch sheet 1 can be positioned to cover the receiving groove 112 formed on the upper surface of the seating part 110.

The pressing plate 120 can fix the pouch sheet 1 to the seating unit 110 (S120). The pressing plate 120 can be located on the upper side of the pouch sheet 1 and the seating unit 110. The pressing plate 120 can be descended toward the pouch sheet 1, and the descending of the pressing plate 120 can be caused by the operation of the lifting unit 130. The pressing plate 120 can press other areas of the pouch sheet 1 except for the area where the receiving portion 2 is formed, thereby bringing it into close contact with the seating unit 110. The pressing plate 120 fixes the pouch sheet 1 to the seating unit 110, so that the flow of the pouch sheet 1 can be minimized during the process of forming the receiving portion 2 by the operation of the forming unit 140.

The sensor unit 150 collects the pressure value formed between the pressing plate 120 and the seating unit 110, and the lifting unit 130 can operate based on the collected pressure value (S130). The sensor unit 150 can be located on the seating unit 110 and can collect the pressure value formed between the pressing plate 120 and the seating unit 110. The pressure value acquired by the sensor unit 150 can be regarded as the pressure value formed on the pouch sheet 1. Here, the pressure value acquired by the sensor unit 150 can be a value after the descending of the pressing plate 120 is completed.

The pressure value acquired by the sensor unit 150 may be calculated by the control unit, etc., and then output through the output unit, etc. The pressure value acquired by the sensor unit 150 may differ depending on each position, and the pressure value according to each position may be expressed on the X-axis and the Y-axis.

The lifting unit 130 can operate based on the pressure value acquired by the sensor unit 150. The lifting unit 130 can operate to move the position of the center of gravity confirmed via the sensor unit 150 to the position of the preset center of gravity by adjusting the inclination of the pressure plate 120. More specifically, in order to form a uniform pressure distribution, the lifting unit 130 in the direction in which the preset center of gravity is located from the current center of gravity can operate to partially descend the pressing plate 120. In addition, the lifting unit 130 in the opposite direction to those described above can operate to partially ascend the pressure plate 120. For details related thereto, refer to the above-described FIGS. 7 and 8.

The sensor unit 150 can obtain the pressure value in real time. After the operation of the lifting unit 130 is completed, the sensor unit 150 can acquire the pressure value. The position of the center of gravity can be calculated again based on the newly acquired pressure value. If the newly confirmed position of the center of gravity is different from the preset position of the center of gravity, the lifting unit 130 can partially ascend or descent the pressure plate 120 by operating again to make it coincident. The lifting unit 130 can operate until the position of the center of gravity calculated by the sensor unit 150 is the same as the present position of the center of gravity.

Therefore, the above-mentioned step (S130S) may include:
a step of acquiring a pressure value by the sensor unit 150, processing the acquired pressure value, and outputting the position of the center of gravity in a current state, a step of comparing the preset position of the center of gravity with the position of the center of gravity in a current state, and a step of operating the lifting unit 130 based on the difference in position between the center of gravity in the preset state and the center of gravity in a current state and adjusting the inclination of the pressure plate 120 in accordance with the operation of the lifting unit 130. In addition, the above-mentioned processes may be repeated until the center of gravity in the preset state and the center of gravity in a current state are equal.

In addition, the operation of the lifting unit 130 may be performed through:
a step of calculating a set pressure value to be requested to the lifting unit 130 based on the pressure value acquired from the sensor unit 150, a step of driving the lifting unit 130 based on the set pressure value, a step of measuring a pressure value formed by the lifting unit 130 by a pressure sensor provided in the lifting unit 130 and comparing the measured pressure value with the preset pressure value, a step of driving the lifting unit 130 based on the difference value between the two values described above, if the collected pressure value and the set pressure value are not equal, and a step of driving the lifting unit 130 based on the difference value between the two values described above. Further, the step of comparing the two values and the step of driving the lifting unit 130 based on the difference value may be repeated until the two values described above are equal.

On the other hand, when the lifting unit 130 is a cylinder that uses air pressure, the lifting unit 130 may include a solenoid valve, etc., for adjusting the flow rate of air. Therefore, the opening/closing level of the solenoid valve of the lifting unit 130 may be determined in accordance with the requested set pressure value. That is, the operation of the lifting unit 130 described above may be performed by opening/closing the solenoid valve. In addition, the pressure sensor provided in the lifting unit 130 may measure the air pressure according to the opening/closing of the solenoid valve.

When the position of the center of gravity calculated by the sensor unit 150 is the same as the preset position of the center of gravity, and the operation of the lifting unit 130 is completed, the forming unit 140 may form a receiving groove 112 in the pouch sheet 1 (S140S). The forming unit 140 is located on the upper side of the pouch sheet 1 and can descend toward the pouch sheet 1. The forming unit 140 is located to correspond to the receiving groove 112 of the fixing unit 110 and can descend toward the receiving groove 112. At this time, the end of the forming unit 140 can be inserted into the receiving groove 112. By receiving a part of the pouch sheet 1 together with the end of the forming unit 140 in the receiving groove 112, a receiving portion 2 that is depressed on a lower side can be formed in the pouch sheet 1.

On the other hand, this pouch forming method can be performed by a control unit included in the pouch forming apparatus 100. More specifically, the operations such as displacement of the pressing plate 120 by the lifting unit 130, descending of the forming unit 140, and collecting the pressure value of the sensor unit 150 can be controlled by the control unit included in the pouch forming apparatus 100.

Although aspects of the disclosure have been described in detail above, the scope of the present disclosure is not limited thereto, and various modifications and improvements can be made by those skilled in the art using the basic concepts of the present disclosure, which are defined in the appended claims, which also falls within the scope of the present disclosure.

### [Description of Symbols]

1: pouch sheet
100: pouch forming apparatus
110: fixing unit
120: pressing plate
130: lifting unit
140: forming unit
150: sensor unit

## Claims

1. A pouch forming apparatus configured to form a receiving portion in a pouch sheet for housing an electrode assembly, the apparatus comprising:
a seating unit configured to receive the pouch sheet,
a pressing plate configured to fix the pouch sheet to the seating unit by pressing the pouch sheet,
a lifting unit configured to move the pressing plate vertically, and
a forming unit configured to press the pouch sheet to form the receiving portion,
wherein an upper part of the seating unit comprises a sensor unit configured to measure a pressure between the pressing plate and the seating unit.

2. The pouch forming apparatus according to claim 1, wherein:
the upper part of the seating unit comprises a receiving groove for forming the receiving portion, and the sensor unit is outside the receiving groove.

3. The pouch forming apparatus according to claim 1, wherein:
the upper part of the seating unit comprises a receiving groove for forming the receiving portion, and
the pressing plate is configured to press the pouch sheet on a portion of the seating unit outside the receiving groove.

4. The pouch forming apparatus according to claim 1, wherein:
the apparatus comprises a plurality of lifting unit, and each lifting unit of the plurality of lifting units operates independently.

5. The pouch forming apparatus according to claim 1, wherein:
the sensor unit includes a surface pressure sensor.

6. The pouch forming apparatus according to claim 1, wherein:
the sensor unit is configured to acquire pressure values at a plurality of positions, and
the sensor unit is configured to calculate a position of a center of gravity based on the pressure values, and the sensor unit is configured to display a pressure value according to each position as a relative value based on a pressure value at the center of gravity.

7. The pouch forming apparatus according to claim 6, wherein:
the lifting unit is configured to operate such that the pressure between the seating unit and the pressing plate changes, so that the position of the center of gravity moves.

8. The pouch forming apparatus according to claim 1, wherein:
the lifting unit is configured to operate based on the pressure measured by the sensor unit.

9. The pouch forming apparatus according to claim 8, wherein:
the lifting unit includes a first lifting unit and a second lifting unit configured to operate based on the pressure measured by the sensor unit, thereby adjusting an inclination of the pressing plate.

10. A method of forming a pouch using the pouch forming apparatus according to claim 1, the method comprising the steps of:
seating a pouch sheet on the seating unit,
pressing the pouch sheet with the pressing plate to fix the pouch sheet on the seating unit,
adjusting an inclination of the pressing plate with the lifting unit, based on the pressure measured by the sensor unit, and
pressing the pouch sheet with the forming unit to form a receiving portion in the pouch sheet.

11. The method according to claim 10, wherein:
the adjusting the inclination of the pressing plate comprises the steps of:
calculating a position of a center of gravity based on the pressure measured by the sensor unit,
comparing the calculated position of the center of gravity with a pre-stored position of the center of gravity, and
operating the lifting unit so that the calculated position of the center of gravity coincides with the pre-stored position of the center of gravity, thereby adjusting the inclination of the pressing plate.
